# FASCICULE DE BREVET EUROPEEN

(11) **EP 1 042 523 B1**
(45) Date de publication et mention de la délivrance du brevet: **28.06.2006**
(21) Numéro de dépôt: 99947591.6
(22) Date de dépôt: 15.10.1999
(51) Int. Cl.: C22C 33/02, C22C 1/04, B22F 1/00

(54) **POUDRE METALLIQUE PREALLIEE MICRONIQUE A BASE DE METAUX DE TRANSITION 3d**
METALLPULVER IM MICRONBEREICH AUF BASIS VON 3d ÜBERGANGSMETALLEN
MICRONIC PRE-ALLOYED METAL POWDER BASED ON 3d TRANSITION METALS

(30) Priorité: 16.10.1998 FR 9813031
(43) Date de publication de la demande: 11.10.2000
(73) Titulaire: EUROTUNGSTENE POUDRES S.A., F-38100 Grenoble (FR)
(72) Inventeur: BONNEAU, Maxime, F-38120 Le Fontanil (FR); CHABORD, Sébastien, F-38100 Grenoble (FR); PROST, Guy, F-38330 Saint Nazaire Les Eymes (FR)
(74) Mandataire: Le Coupanec, Pascale A.M.P.
(86) Numéro de dépôt international: PCT/FR1999/002519
(87) Numéro de publication internationale: WO 2000/023631

(56) Documents cités:
- WO-A-97/21844
- WO-A-98/49361
- GB-A- 2 328 218
- CHEMICAL ABSTRACTS, vol. 108, no. 24, 13 juin 1988 (1988-06-13) Columbus, Ohio, US; abstract no. 208622, GEN, M. YA. ET AL: "Levitation-jet method for condensation synthesis of ultrafine powders of alloys and metal oxides and their structure" XP002131447 & FIZIKOKHIM. UL'TRADISPERSNYKH SIST. (1987), 151-7. EDITOR(S): TANANAEV, I. V. PUBLISHER: NAUKA, MOSCOW, USSR. ,1987,
- CHEMICAL ABSTRACTS, vol. 126, no. 16, 21 avril 1997 (1997-04-21) Columbus, Ohio, US; abstract no. 217721, REISSE, J. ET AL: "Quantitative sonochemistry" XP002131448 & ULTRASON. SONOCHEM. (1996), 3(3), S147-S151 ,1996,
- CHEMICAL ABSTRACTS, vol. 118, no. 14, 5 avril 1993 (1993-04-05) Columbus, Ohio, US; abstract no. 130032, SAIDA, JUNJI ET AL: "Manufacture of alloy fine powders" XP002131449 & JP 04 289107 A (NISSHIN STEEL CO., LTD., JAPAN) 14 octobre 1992 (1992-10-14)
- ENGSTROEM U ET AL: "POWDERS AND PROCESSES FOR HIGH PERFORMANCE PM STEELS" POWDER METALLURGY,GB,METALS SOCIETY. LONDON, vol. 35, no. 1, 1 janvier 1992 (1992-01-01), pages 67-72, XP002040941 ISSN: 0032-5899
- CHEMICAL ABSTRACTS, vol. 121, no. 14, 3 octobre 1994 (1994-10-03) Columbus, Ohio, US; abstract no. 161554, UNAMI, SHIGERU ET AL: "Low-alloy steels for manufacture of precision parts by powder metallurgy" XP002131450 & JP 06 081001 A (KAWASAKI STEEL CO, JAPAN) 22 mars 1994 (1994-03-22)
- CHEMICAL ABSTRACTS, vol. 120, no. 22, 30 mai 1994 (1994-05-30) Columbus, Ohio, US; abstract no. 276698, HANAOKA, HIROTAKA ET AL: "Fe-Cu-Ni composite powders for powder metallurgy, the prepn. method, and sinters using the powders" XP002131451 & JP 06 025793 A (KOBE STEEL LTD, JAPAN;KOBERUKO KAKEN KK) 1 février 1994 (1994-02-01)

## Description

L'invention concerne de nouvelles poudres métalliques microniques à base de métaux de transition 3d.

On sait qu'une branche importante de la métallurgie est fondée sur la fabrication de poudres qui peuvent être utilisées notamment comme pigments ou dans la réalisation de pièces frittées.

Les pièces métalliques utilisées concrètement sont généralement des alliages métalliques. On rappelle que les alliages métalliques, selon les caractéristiques de solubilité mutuelle des métaux constituants, peuvent être des systèmes monophasés ou polyphasés.

La réalisation de pièces frittées à l'aide d'un mélange de poudres de métaux purs soulève des difficultés lorsqu'on veut obtenir une pièce frittée homogène.

Il est donc souhaitable de préparer des poudres préalliées, dans lesquelles chaque particule contient les métaux constituants de l'alliage dans les mêmes proportions que l'ensemble de la poudre. Les documents WO 97/21844 et WO 98/49361 décrivent des poudres préalliées de ce type, notamment à base de fer, nickel et cobalt.

Pour obtenir des poudres préalliées, on peut notamment utiliser des techniques de coprécipitation de sels ou d'hydroxydes métalliques. Les coprécipités, séchés et éventuellement broyés, sont ensuite soumis à l'action d'un agent réducteur, par exemple l'hydrogène, pour obtenir des poudres métalliques.

Lorsqu'on souhaite opérer au départ de sels solubles dans l'eau, on peut préparer des suspensions contenant les sels ou hydroxydes métalliques dans les proportions requises, et soumettre les suspensions obtenues à une opération de co-séchage par atomisation. On obtient ainsi des particules dont la composition en sels et/ou hydroxydes métalliques est homogène. Ces particules peuvent être ensuite réduites en poudres métalliques préalliées à l'aide d'un agent réducteur.

On sait que les techniques d'élaboration des poudres métalliques conduisent généralement à l'obtention d'agglomérats constitués par plusieurs grains élémentaires reliés entre eux ponctuellement. Les techniques de broyage permettent généralement d'augmenter le nombre de grains élémentaires individuels, et de réduire le nombre de grains élémentaires présents dans les agrégats.

Comme indiqué ci-dessus, l'invention concerne des poudres microniques. Dans la présente demande, on appelle "poudres microniques" des poudres telles que la plus grande dimension des grains élémentaires est supérieure à 200 nm et inférieure à 5 micromètres. Les dimensions des grains élémentaires peuvent être mesurées notamment au microscope électronique à balayage. Les poudres microniques doivent être distinguées des poudres nanométriques, dont les grains élémentaires ont des dimensions inférieures à 100 nm environ.

L'invention concerne de nouvelles poudres métalliques telles que définies en rev 1.

Les poudres de l'invention présentent des propriétés intéressantes dans diverses applications, comme cela sera précisé dans la suite de la description.

Dans la présente demande, sauf indications contraires, une poudre "constituée essentiellement" de tel et tel métal (constituants "essentiels") contient chacun de ces métaux à raison de plus de 3 % en poids. Un tel constituant, lorsqu'il peut être utilisé à raison de moins de 3 %, est alors considéré comme un additif dans les alliages où il est présent dans de telles faibles proportions.

Les additifs peuvent être en pratique tous métaux ou métalloïdes susceptibles d'améliorer les propriétés des poudres ou des pièces frittées. Dans une poudre donnée, les additifs peuvent être choisis notamment parmi tous les métaux qui ne sont pas des constituants essentiels (tels que définis ci-dessus) de la poudre, ou les oxydes de ces métaux.

La présence d'additifs peut avoir notamment pour but d'améliorer les opérations de frittage. On sait que la présence d'un additif, même en très faibles quantités (par exemple de l'ordre de 0,1 %) permet souvent d'abaisser notablement la température de frittage.

Le choix des additifs et de leur quantité peut être déterminé par de simples expériences de routine.

Dans la présente demande, les pourcentages de métaux sont des pourcentages en poids, rapportés au poids total des métaux de la poudre.

On sait que les poudres métalliques ont tendance à s'oxyder à l'air, cette oxydation augmentant avec le temps et avec le caractère plus ou moins oxydable des métaux présents. Dans les poudres de l'invention, la teneur en oxygène total (mesurée par réduction à l'aide de carbone), au sortir du four où a été opérée la réduction des hydroxydes et/ou des sels métalliques, est généralement inférieure à 2 % par rapport au poids total de la poudre. En optimisant les conditions opératoires de la réduction par l'hydrogène, on peut obtenir, si désiré, des teneurs en oxygène nettement plus faibles.

Les poudres de l'invention peuvent être préparées selon les méthodes de coprécipitation et éventuellement de séchage par atomisation, suivies de réduction, qui ont été décrites ci-dessus et qui sont connues en soi. Le choix de la température et du temps de réduction peut être déterminé à l'aide de simples expériences de routine, notamment par analyse thermogravimétrique. On peut optimiser la taille des grains élémentaires en sachant que cette taille augmente avec la température et avec la durée du chauffage, pendant l'opération de réduction.

On va décrire plus particulièrement ci-après certaines familles de poudres qui font partie de l'invention.

Parmi les poudres de l'invention, on citera notamment :
(a) celles constituées essentiellement de fer, de nickel et de cuivre, les proportions des constituants étant les suivantes : de 10 % à 30 % pour le fer, de 30 % à 50 % pour le cuivre et de 30 % à 50 % pour le nickel ; et en particulier celles contenant de 15 % à 25 % de fer, de 35 % à 45 % de cuivre et de 35 % à 45 % de nickel.
   De telles poudres peuvent être utilisées notamment comme liants dans la préparation par frittage d'outils diamantés, ou encore comme base pour aciers spéciaux frittés.
(b) les poudres constituées essentiellement de fer, de nickel, de cobalt et de cuivre, et d'au moins un additif, les proportions des constituants étant les suivantes : moins de 50 %, et en particulier moins de 40 %, pour le fer, au plus 50 % pour le cuivre, au plus 50 % pour le cobalt, et de 30 % à 90 % pour l'ensemble fer + nickel.

Ces poudres peuvent servir de base pour aciers spéciaux frittés, ou encore de liants pour les outils diamantés frittés.

L'invention concerne également l'utilisation d'une poudre telle que définie précédemment comme pigment magnétique dans des peintures ou comme poudre permettant la réalisation de pièces frittées utilisables comme pièces conduisant l'électricité, soudures, aimants, aciers spéciaux, outils de coupe ou d'abrasion, diamantés ou au carbure de titane ou au carbure de tungstène. Les domaines d'application des diverses catégories de poudres ont été précisés ci-dessus.

D'une façon générale, les poudres de l'invention, utilisées dans l'obtention de pièces frittées, présentent l'avantage d'améliorer les propriétés mécaniques ou physiques des pièces obtenues et/ou l'avantage de faciliter le frittage en permettant notamment d'opérer à des températures et/ou des pressions pas trop élevées et/ou d'améliorer la densification des pièces frittées.

Les exemples suivants illustrent l'invention.

### EXEMPLES

### EXEMPLE 1 exclu du domaine de l'invention

On prépare une solution aqueuse de chlorures de cuivre et de zinc en dissolvant dans 40 litres d'eau 7,27 kg de cristaux de chlorure cuivrique et 1,64 kg de cristaux de chlorure de zinc. On verse cette solution dans 40 litres d'une solution aqueuse d'hydroxyde de sodium à 123 g/l chauffée à 60°C, de façon à effectuer la coprécipitation des hydroxydes de cuivre et de zinc. Le précipité ainsi obtenu est ensuite séparé par filtration puis lavé pour éliminer le chlorure de sodium. Le précipité est remis en suspension dans l'eau puis séché dans un sécheur atomiseur. Par réduction sous hydrogène puis désagglomération au broyeur à marteaux, on obtient une poudre métallique titrant 0,9 % en oxygène, 76,9 % en cuivre et 22,1 % en zinc. Au microscope électronique à balayage, on mesure une taille de grain élémentaire moyenne d'environ 3 µm. Par frittage sans pression, on obtient des pièces de microstructure très homogène, d'une taille moyenne d'environ 3 µm. Dureté Brinell : 115.

### EXEMPLE 2 exclu du domaine de l'invention

On prépare une solution aqueuse contenant les chlorures de cuivre, de zinc et de fer en dissolvant dans 22 litres d'eau 10,2 kg de cristaux de chlorure cuivrique, 0,81 kg de cristaux de chlorure de zinc et 1,75 litre d'une solution de chlorure ferrique à 152 g/l. On verse cette solution dans 50 litres d'une solution aqueuse d'hydroxyde de sodium à 129 g/l chauffée à 60°C, de façon à effectuer la coprécipitation des hydroxydes de cuivre, de zinc et de fer. Le précipité ainsi obtenu est ensuite séparé par filtration puis lavé. Le précipité est remis en suspension dans l'eau puis séché dans un sécheur atomiseur. Par réduction sous hydrogène puis désagglomération au broyeur à marteaux, on obtient une poudre métallique titrant 1,9 % en oxygène, 82,5 % en cuivre, 9,3 % en zinc et 6 % en fer.

### EXEMPLE 3 exclu du domaine de l'invention

On prépare une solution aqueuse contenant les chlorures de cuivre, de nickel et de fer en mélangeant 0,16 litre d'une solution de chlorure cuivrique (à 211 g/l en cuivre) avec 0,615 litre d'une solution de chlorure de nickel (à 170,6 g/l en nickel) et 16,63 litres d'une solution de chlorure ferrique (à 202 g/l en fer). On verse cette solution sous agitation dans 40 litres d'une solution d'hydroxyde de sodium titrant 213 g/l chauffée à 60°C, de façon à effectuer la coprécipitation des hydroxydes de cuivre, de nickel et de fer. Le précipité ainsi obtenu est ensuite séparé par filtration puis lavé. On remet le précipité en suspension dans l'eau à raison d'environ 5 litres d'eau pour 1 kg de précipité. On ajoute à cette suspension une solution d'acide molybdique (titrant 135 g/l en molybdène) à raison de 0,01 litre de cette solution molybdique par kg de précipité. On sèche la suspension dans un sécheur atomiseur. Par réduction sous hydrogène puis désagglomération au broyeur à marteaux, on obtient une poudre métallique titrant 1,39 % en oxygène, 93,8 % en fer, 3,15 % en nickel, 1,2 % en cuivre et 0,53 % en molybdène. La surface spécifique de la poudre mesurée par la méthode BET est de 0,54 m²/g. La poudre obtenue par le procédé décrit ci-dessus est alors compactée à froid en éprouvettes parallélépipédiques d'environ 60 % de densité relative, c'est-à-dire dont la densité représente 60 % de la densité théorique. Par une opération de frittage en four sous hydrogène (montée en 5 heures à 1100°C, puis palier de 1 heure à 1100°C, suivi de refroidissement en environ 12 heures) les pièces présentent un retrait volumique dû au frittage de 26 %.

### EXEMPLE 4 exclu du domaine de l'invention

On prépare une solution aqueuse contenant les chlorures de cobalt et de nickel en mélangeant 14 litres d'une solution de chlorure de cobalt à 172 g/l de cobalt avec 13,7 litres d'une solution de chlorure de nickel à 175,9 g/l en nickel. On verse cette solution sous agitation dans 40 litres d'une solution d'hydroxyde de sodium titrant 187,5 g/l chauffée à 60°C, de façon à effectuer la coprécipitation des hydroxydes de cobalt et de nickel. Le précipité ainsi obtenu est ensuite séparé par filtration puis lavé. On remet alors le précipité en suspension dans l'eau à raison d'environ 5 litres d'eau pour 1 kg de précipité. Par séchage de la suspension dans un sécheur atomiseur, puis réduction sous hydrogène, et désagglomération au broyeur à marteaux, on obtient une poudre métallique titrant 0,51 % en oxygène, 49,7 % en cobalt et 49,7 % en nickel. Au microscope électronique à balayage, on mesure une taille de grain élémentaire moyenne d'environ 2 µm. La surface spécifique mesurée par la méthode BET est de 0,86 m²/g.

### EXEMPLE 5 à 14 :

De façon analogue, on a préparé des poudres préalliées dont la composition en métaux est la suivante :
- Fer 20,3 ; nickel 40 ; cuivre 39,7 ;

## Revendications

1. Poudre métallique préalliée constituée
- d'au moins deux constituants essentiels, choisis parmi les métaux de transition, fer, nickel, cobalt et cuivre, avec chacun des constituants essentiels étant présents dans ladite poudre à raison de plus de 3 % en poids par rapport à son poids total, et, le cas échéant,
- d'au moins un additif, ledit additif étant présent dans ladite poudre à raison de moins de 3 % en poids par rapport à son poids total, et étant choisi parmi les métaux qui ne sont pas des constituants essentiels de ladite poudre ou les oxydes de ces métaux,
ladite poudre ayant des dimensions de grains élémentaires mesurés au microscope électronique à balayage supérieur à 200 nm et inférieur à 5 µm, et étant choisie parmi :
a) Une poudre constituée de trois constituants essentiels figurés par le fer, le nickel et le cuivre les proportions des constituants étants les suivantes : de 10 % à 30 % pour le fer, de 30 % à 50 % pour le cuivre et de 30 % à 50 % pour le nickel ; et
b) Une poudre constituée de quatre constituants essentiels figurés par le fer, le nickel, le cobalt et le cuivre, et au moins un additif, les proportions des constituants étant les suivantes : moins de 50 % pour le fer, pas plus de 50 % pour le cuivre, pas plus de 50 % pour le cobalt, et de 30 % à 90 % pour l'ensemble fer + nickel.

2. Poudre selon la revendication 1, constituée de trois constituants essentiels figurés par le fer, le nickel et le cuivre, et les proportions des constituants étant les suivantes : de 10 % à 30 % pour le fer, de 30 % à 50 % pour le cuivre et de 30 % à 50 % pour le nickel.

3. Poudre selon la revendication 2, contenant de 15 % à 25 % de fer, de 35 % à 45 % de cuivre et de 35 % à 45 % de nickel.

4. Poudre selon la revendication 1, constituée de trois constituants essentiels figurés par le fer, le nickel, le cobalt et le cuivre, et d'au moins un additif, les proportions des constituants étant les suivantes : moins de 50 % pour le fer, pas plus de 50 % pour le cuivre, pas plus de 50 % pour le cobalt, et de 30 % à 90 % pour l'ensemble fer + nickel.

5. Poudre selon la revendication 4, contenant moins de 40 % de fer.

6. Utilisation d'une poudre selon l'une quelconque des revendications 1 à 5 dans la réalisation de pièces frittées.

## Claims

1. Prealloyed metal powder consisting of
- at least two essential components, selected from the transition metals, iron, nickel, cobalt and copper, with each of the essential components being present in this powder in a ratio of more than 3% in weight in relation to its total weight and if necessary,
- at least one additive, this additive being present in this powder in a ratio of at least 3% in weight in relation to its total weight, being selected from the metals which are not essential components of this powder or oxides of these metals, this powder having dimensions of elementary grains measured with an electronic microscope with scanning of more than 200 nm and less than 5 µm and being selected from:
a) A powder made up of three essential components in the form of iron, nickel and copper, the proportions of the components being as follows: from 10% to 30% for iron, from 30% to 50% for copper and from 30% to 50% for nickel; and
b) A powder made up of four essential components in the form of iron, nickel, cobalt and copper and at least one additive, the proportions of the components being as follows: less than 50% for iron, no more than 50% for copper, no more than 50% for cobalt and from 30% to 90% for the iron + nickel together

2. Powder according to claim 1, made up of three essential components in the form of iron, nickel and copper, the proportions of the components being as follows: from 10% to 30% for iron, from 30% to 50% for copper and from 30% to 50% for nickel.

3. Powder according to claim 2, containing from 15% to 25% iron, from 35% to 45% copper and from 35% to 45% nickel.

4. Powder according to claim 1, made up of three essential components in the form of iron, nickel, cobalt and copper and at least one additive, the proportions of the components being as follows: less than 50% for iron, no more than 50% for copper, no more than 50% for cobalt and from 30% to 90% for the iron + nickel together.

5. Powder according to claim 4, containing less than 40% iron.

6. Use of a powder according to any one of claims 1 to 5 in making sintered parts.

## Patentansprüche

1. Vorlegiertes Metallpulver bestehend
- aus wenigstens zwei wesentlichen Bestandteilen, ausgewählt unter den Übergangsmetallen, Eisen, Nickel, Kobalt und Kupfer, wobei jeder der wesentlichen Bestandteile in besagtem Pulver zu mehr als 3 Gewichts-% im Verhältnis zu seinem Gesamtgewicht vorhanden ist, und gegebenenfalls
- aus wenigstens einem Zusatz, besagter Zusatz, der zu weniger als 3 Gewichts-% im Verhältnis zu seinem Gesamtgewicht in besagtem Pulver vorhanden ist, und der unter den Metallen ausgewählt ist, die keine wesentlichen Bestandteile des besagten Pulvers sind oder die Oxide dieser Metalle,
wobei in besagtem Puder die Größe der einzelnen Körner größer als 200 nm und kleiner als 5 µm ist, gemessen am Rasterelektronenmikroskop, und ausgewählt ist aus:
a) einem Pulver bestehend aus drei wesentlichen Bestandteilen, dargestellt durch das Eisen, den Nickel und das Kupfer, wobei die Verhältnisse der Bestandteile die folgenden sind: von 10% bis 30% für das Eisen, von 30% bis 50% für das Kupfer und von 30% bis 50% für den Nickel; und
b) einem Pulver bestehend aus vier wesentlichen Bestandteilen, dargestellt durch das Eisen, den Nickel, den Kobalt und das Kupfer und wenigstem einem Zusatz,
wobei die Verhältnisse der Bestandteile die folgenden sind: weniger als 50% für das Eisen, nicht mehr als 50 % für das Kupfer, nicht mehr als 50% für den Kobalt und von 30% bis 90% für die Gesamtheit von Eisen + Nickel.

2. Pulver gemäß Anspruch 1, das aus drei wesentlichen Bestandteilen besteht, dargestellt durch das Eisen, den Nickel und das Kupfer, und wobei die Verhältnisse der Bestandteile die folgenden sind: von 10% bis 30% für das Eisen, von 30% bis 50% für das Kupfer und von 30% bis 50% für den Nickel.

3. Pulver gemäß Anspruch 2, enthaltend von 15% bis 25% Eisen, von 35% bis 45% Kupfer und von 35% bis 45% Nickel.

4. Pulver gemäß Anspruch 1, das aus drei wesentlichen Bestandteilen besteht, dargestellt durch das Eisen, den Nickel, den Kobalt und das Kupfer, und aus wenigstens einem Zusatz besteht, wobei die Anteile der Bestandteile die folgenden sind: weniger als 50% für das Eisen, nicht mehr als 50% für das Kupfer, nicht mehr als 50% für den Kobalt und von 30% bis 90% für die Gesamtheit von Eisen + Nickel.

5. Pulver gemäß Anspruch 4, das weniger als 40% Eisen enthält.

6. Verwendung eines Pulvers gemäß irgendeinem der Ansprüche 1 bis 5 in der Herstellung von Sinterteilen.
